# FASCICULE DE BREVET EUROPEEN

(11) **EP 0 612 036 B1**
(45) Date de publication et mention de la délivrance du brevet: **15.07.1998**
(21) Numéro de dépôt: 94400315.1
(22) Date de dépôt: 14.02.1994
(51) Int. Cl.: G06F 3/12, G06K 15/00

(54) **Inverseur électronique de l'ordre des pages pour un système de traitement de courrier et plieuse-inséreuse comportant un tel inverseur**
Elektronischer Seitenreihenfolgenwender für ein Postverarbeitungssystem und eine Vorrichtung zum Falten und Einstecken mit einem solchen Wender
Electronic page order inverter for a mail processing system and folder-inserter incorporating such a device

(30) Priorité: 17.02.1993 FR 9301779
(43) Date de publication de la demande: 24.08.1994
(73) Titulaire: NEOPOST INDUSTRIE, F-92220 Bagneux (FR)
(72) Inventeur: Krasuski, Marek, F-92260 Fontenay aux Roses (FR); Mazeiller, Dominique, F-95530 La Frette sur Seine (FR)
(74) Mandataire: Joly, Jean-Jacques

(56) Documents cités:
- EP-A- 0 479 494
- PATENT ABSTRACTS OF JAPAN vol. 11, no. 358 (P-639)21 Novembre 1987 & JP-A-62 133 520 (CANON)

## Description

L'invention concerne un inverseur électronique de l'ordre des pages pour un système de traitement de courrier comportant :
- un système simple de traitement de texte, constitué par exemple d'un écran cathodique, d'un clavier, d'une unité centrale, d'une imprimante feuille à feuille;
- et au moins une plieuse-inséreuse permettant de mettre les feuilles d'une lettre dans une enveloppe.

Dans le cas où il s'agit d'un petit système produisant des lettres en petite quantité, l'imprimante n'est généralement pas couplée mécaniquement à la plieuse-inséreuse. Le transfert est fait manuellement. L'utilisateur prend les feuilles à la sortie de l'imprimante et les insère dans une entrée de la plieuse-inséreuse. Il faut distinguer deux types d'imprimante : certaines imprimantes fournissent les feuilles, sur lesquelles a été imprimée une lettre, dans un ordre tel que ces feuilles peuvent être insérées directement dans une enveloppe. D'autres imprimantes fournissent les feuilles dans un ordre tel qu'il n'est pas possible de les insérer directement dans une enveloppe car le destinataire trouverait la dernière page avant la première page. L'utilisateur doit donc non seulement transférer manuellement des feuilles, mais il doit en plus modifier leur ordre.

Pour rendre plus pratique un tel système de traitement de courrier, il est envisageable de coupler mécaniquement la sortie de l'imprimante à l'entrée de la plieuse-inséreuse. Mais ce couplage mécanique doit résoudre le problème de l'inversion de pages si l'imprimante, déjà possédée par l'utilisateur, ne fournit pas les pages dans l'ordre convenable pour l'insertion directe dans une enveloppe. Il est envisageable de rajouter à l'imprimante un inverseur mécanique de pages, tels que ceux décrits dans les demandes de brevet européen EP O 365 283 et EP O 398 187, mais ces dispositifs mécaniques sont difficiles à adapter à une imprimante déjà existante et que l'utilisateur ne veut pas changer en raison du coût de ce changement.

JP-A-62 133 520 divulgue un inverseur électronique de pages comprenant des moyens pour changer l'ordre des pages à imprimer. A cet effet les données d'un document sont d'abord enregistré dans une mémoire dans l'ordre consécutif des pages. Avant de les imprimer la suite des pages peut être changée sur commande (voir le préambule de la revendication 1).

Le but de l'invention est de permettre un transfert automatique entre une imprimante et une plieuse-inséreuse, dans le cas où l'imprimante est du type qui fournit les pages d'une lettre dans un ordre qui ne convient pas pour l'insertion directe dans une enveloppe, et sans nécessiter le changement complet de l'imprimante, ou des modifications mécaniques importantes, ou un changement du logiciel de traitement de texte.

L'objet de l'invention est un inverseur électronique de l'ordre des pages pour un système de traitement de courrier comme défini dans la revendication 1.

L'inverseur ainsi caractérisé permet de rendre plus pratique un système simple de traitement de courrier qui nécessite habituellement un transfert manuel et une inversion manuelle des pages entre l'imprimante et la plieuse-inséreuse, car il suffit d'un dispositif mécanique simple pour coupler la sortie de l'imprimante à l'entrée de la plieuse-inséreuse, l'inversion des pages étant réalisée sans aucun dispositif mécanique, mais par ce dispositif électronique dont la réalisation est très peu coûteuse, et qui peut être connecté très facilement par un utilisateur non spécialiste, entre le système de traitement de texte et l'imprimante.

Selon un mode préféré une plieuse-inséreuse comporte un inverseur selon l'invention. Une telle plieuse-inséreuse permet à l'utilisateur possédant déjà un système de traitement de texte et une imprimante qui fournit les feuilles dans un ordre qui ne convient pas pour l'insertion directe, de réaliser néanmoins un système de traitement de courrier plus complet en adjoignant une plieuse-inséreuse équipé de cet inverseur pour résoudre le problème dû à l'inversion de l'ordre des feuilles.

L'invention sera mieux comprise et d'autres caractéristiques apparaîtront à l'aide de la description ci-dessous et les figures l'accompagnant :
- la figure 1 représente schématiquement un système de traitement de courrier comportant un exemple de réalisation de l'inverseur selon l'invention;
- la figure 2 représente les feuilles imprimées sortant de l'imprimante de ce système de traitement de courrier, lorsque l'inverseur de pages est mis hors service;
- la figure 3 représente les feuilles imprimées sortant de l'imprimante de ce système, dans le cas où l'inverseur selon l'invention est mis en service.

Cet exemple de réalisation comporte : un système de traitement de texte 1, constitué d'un écran cathodique 11, d'une unité centrale 12, et d'un clavier 13; une imprimante 2; un transporteur 3; une plieuse-inséreuse 4; et un inverseur électronique de pages 5.

L'unité centrale 12 et l'imprimante 2 comportent chacune une entrée-sortie normalisée et qui devraient être reliées l'une à l'autre directement, selon l'art antérieur. Selon l'invention, ces deux entrées-sorties sont reliées respectivement à des entrées-sorties de l'inverseur 5. Une autre entrée-sortie de l'inverseur 5 est reliée à une entrée-sortie de la plieuse-inséreuse 4, qui est un modèle classique.

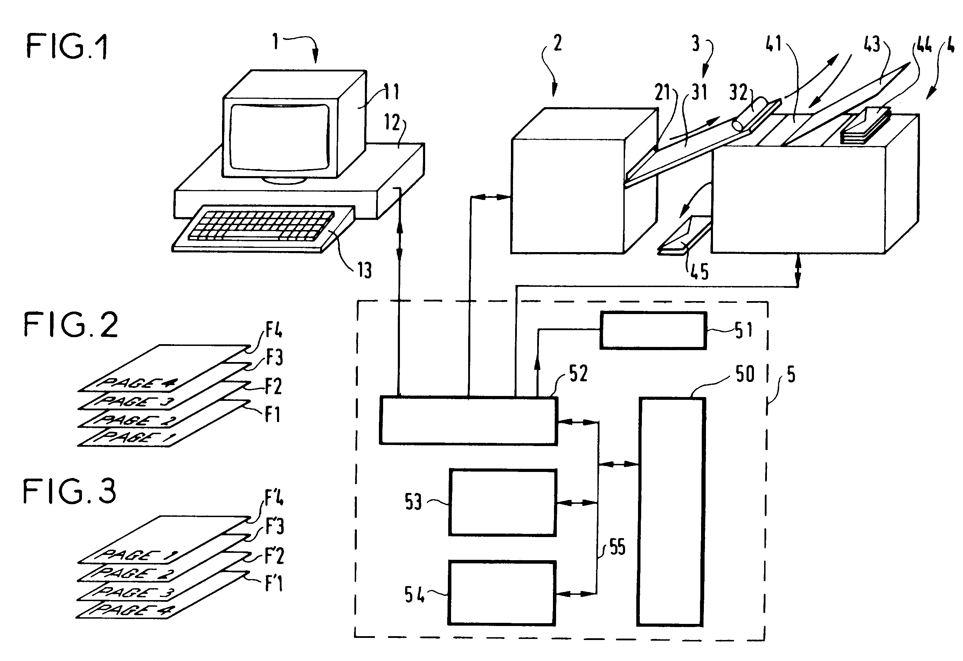

La figure 2 représente quatre feuilles F1, ..., F4 sur lesquelles ont été imprimées par l'imprimante 2 les quatre pages d'une lettre, notées PAGE1, ..., PAGE4. La figure 2 illustre le cas où l'unité centrale 12 et l'imprimante 2 sont reliées directement, soit par une liaison selon l'art antérieur, soit parce que l'inverseur 5 est mis hors service. Les feuilles F1, ..., F4 s'empilent successivement avec la face imprimée dessus, de telle sorte que la dernière, PAGE 4, est la première qui apparaît pour la lecture par un utilisateur. Cet ordre ne convient pas pour une insertion directe sous enveloppe.

La figure 3 représente quatre feuilles F'1, ..., F'4, sur lesquelles ont été imprimées par l'imprimante 2 les quatre pages d'une lettre, dans le cas où l'inverseur 5 est mis en service. Il apparaît que les feuilles F'1, ..., F'4 s'empilent successivement dans cet ordre en présentant encore la face imprimée sur le dessus, mais la première page du texte, PAGE1, est imprimée sur la feuille F'4. Par conséquent, les pages peuvent être lues dans l'ordre des numéros de page croissants, sans avoir à permuter les pages. Une insertion directe dans une enveloppe est donc possible au moyen d'un transporteur 3 qui est très simple puisqu'il n'a pas à inverser l'ordre des pages.

Dans cet exemple de réalisation l'inverseur 5 comporte :
- un microprocesseur 50, associé à une mémoire morte 53 contenant le programme de fonctionnement de l'inverseur;
- une mémoire vive 54 ayant une capacité permettant de stocker un texte de 64 pages, par exemple;
- des interfaces d'entrées-sorties 52 reliées notamment aux entrées-sorties de l'inverseur 5 qui sont reliées , à l'unité centrale 12, à l'imprimante 2, et à la plieuse-inséreuse 4;
- un dispositif d'affichage 51, muni éventuellement d'un ronfleur pour alerter l'utilisateur lorsque le nombre de pages mémorisées par l'inverseur 5 dépasse une valeur de seuil prédéterminée, cet afficheur 51 étant relié à une sortie des interfaces 52;
- et un bus 55 reliant le microprocesseur 50 au interfaces 52, et aux mémoires 53 et 54.

L'imprimante 2 comporte une fente de sortie 21 qui est reliée à une fente d'entrée 41 de la plieuse-inséreuse 4 par le transporteur 3 constitué d'un plan incliné 31 et d'au moins un rouleau 32 mû par un moteur non représenté. Les flèches indiquent le parcours suivi par chaque feuille sortant de l'imprimante 2. Chaque feuille transportée par le transporteur 3 tombe sur un plan incliné 43 qui la guide dans sa descente vers l'entrée 41. Une autre entrée de la plieuse-inséreuse 4 reçoit une pile d'enveloppes 44. Une sortie de la plieuse-inséreuse 4 fournit une pile d'enveloppes 45 contenant chacune les feuilles d'une lettre ayant été pliées et insérées dans cette enveloppe.

Quand un utilisateur lance l'impression d'une lettre, le système de traitement de texte 1 fournit le texte de cette lettre sous la forme d'une suite de mots binaires représentant chacun un caractère alphanumérique. Le fontionnement de l'inverseur 5 nécessite que le début de chaque page de texte à inverser soit repéré par la présence d'un caractère spécial ou d'une chaîne de caractères spéciale. Ce caractère spécial peut être le caractère normalisé ASCII dont la valeur hexadécimale est 12, qui correspond à une frappe sur la touche saut de page, sur le clavier 13. Ou bien, le début de page peut être repéré par la chaîne de caractères spéciale : $ INVERSION $, par exemple.

La fin de la série de pages constituant le texte d'une même lettre doit être repérée aussi par une chaîne de caractères spéciale, par exemple : $ INVERSION FIN $. D'autres chaînes de caractères spéciales peuvent être utilisées pour donner des instructions à l'inverseur 5, par exemple pour le mettre en service ou le mettre hors service (transparent).

L'inverseur 5 détecte chacun des caractères spéciaux ou des chaînes de caractères spéciales qui indiquent les débuts de page. Il stocke séquentiellement chaque page dans la mémoire vive 54 en mémorisant, dans 64 registres spécialisés correspondant aux 64 pages que la mémoire 54 peut stocker, les adresses de début de ces pages.

Le microprocesseur 50 possède en outre un registre de comptage des pages qu'il reçoit. Lorsqu'il détecte la chaîne de caractères spéciale indiquant la fin d'une lettre, et si l'imprimante fournit un signal indiquant qu'elle est prête, le microprocesseur 50 lance la lecture des pages mémorisées dans la mémoire 54, en commençant par la dernière qui a été mémorisée. Pour cela, le microprocesseur 50 utilise le registre de comptage comme premier pointeur pour adresser successivement les registres contenant les adresses de début de page. Le premier pointeur désigne tout d'abord le registre qui contient l'adresse du début de la dernière page de la lettre. Pour lire chaque caractère de cette page, dans l'ordre initial, le microprocesseur 50 utilise un second pointeur, dit d'adresse de caractère, qui est chargé avec l'adresse de début de page, trouvée dans le registre désigné par le premier pointeur. Puis le second pointeur est incrémenté au fur et à mesure de l'impression des caractères par l'imprimante 2.

La fin de chaque page est repérée par le caractère ou la chaîne de caractères indiquant le début de la page suivante, ou la chaîne de caractère indiquant la fin de la série de pages.

Lorsque le microprocesseur 50 détecte que ce caractère ou cette chaîne de caractères spéciale vient d'être lue dans la mémoire 54, il arrête l'incrémentation de ce second pointeur et il décrémente d'une unité le premier pointeur. Ce processus est réitéré jusqu'à ce que le microprocesseur 50 détecte que le premier pointeur est arrivé à la première page, et que le caractère spécial ou la chaîne de caractères spéciale indiquant la fin de la première page ait été lu et détecté.

Lorsque toutes les pages d'une lettre ont été imprimées, l'imprimante 2 fournit un signal indiquant qu'elle est de nouveau disponible et l'inverseur 5 en conclut qu'il peut lancer un cycle de fonctionnement de la plieuse-inséreuse 4, si celle-ci fournit un signal indiquant qu'elle est prête. L'inverseur 5 joue donc en outre un rôle de coordinateur pour le traitement de texte 1, l'imprimante 2, et la plieuse-inséreuse 4.

L'inverseur 5 peut alerter l'utilisateur au moyen de l'afficheur 51, et d'un ronfleur éventuellement, en cas d'anomalie telle que par exemple un nombre de pages excessif par rapport à une valeur de seuil correspondant au maximum admissible par la plieuse-inséreuse 4; ou bien dans le cas où l'imprimante 2 ne fournit pas le signal indiquant qu'elle est prête.

Selon une variante de réalisation, l'inverseur n'est pas réalisé dans un boîtier indépendant, mais est incorporé à la plieuse-inséreuse 4.

## Revendications

1. Inverseur électronique de l'ordre des pages pour un système de traitement de courrier comprenant un système de traitement de texte (1), une imprimante (2) feuille à feuille et une plieuse-inséreuse (4), inverseur destiné à être couplé électroniquement entre le système de traitement de texte et l'imprimante et comprenant des moyens (50,53,54) pour enregistrer une suite de mots binaires représentant les caractères alphanumériques d'une lettre au fur et à mesure qu'ils lui sont fournis par le système de traitement de texte, caractérisé en ce que l'inverseur comprend des moyens (50,53,54) pour insérer dans la suite de mots binaires une premier code de contrôle au début de chaque page de la lettre et un second code de contrôle à la fin de la dernière page de la lettre, lesdits premier et second codes de contrôle constituant des instructions à l'inverseur, et des moyens (50,53,54) pour reconnaître dans la suite de mots binaires enregistrés lesdits premier et second codes de contrôle en vue de restituer à l'imprimante lesdits mots binaires enregistrés, page par page de la lettre selon l'ordre inverse des pages de la lettre tout en respectant l'ordre initial des caractères constituant chaque page.

2. Inverseur selon la revendication 1, comprenant en outre un dispositif d'alarme (52) pour alerter l'utilisateur du système de traitement de courrier lorsque le nombre des pages mémorisées dépasse une valeur de seuil prédéterminée.

3. Système de traitement de courrier comprenant un système de traitement de texte (1), une imprimante feuille à feuille (2); une plieuse-inséreuse (4) couplée mécaniquement à l'imprimante pour : recevoir des feuilles sur lesquelles l'imprimante a imprimé le texte d'une lettre; plier ces feuilles; et les insérer dans une enveloppe; et un inverseur électronique selon l'une des revendications 1 ou 2 ayant des interfaces d'entrée-sortie reliées au système de traitement de texte, à l'imprimante, à la plieuse-inséreuse en vue de la coordination de leur fonctionnement.

4. Système selon la revendication 3, dans lequel la plieuse-inséreuse (4) est couplée mécaniquement à l'imprimante (2) par un transporteur comportant un plan incliné (31) et au moins un rouleau (32) mû par un moteur.

5. Plieuse-inséreuse comprenant un inverseur électronique selon l'une des revendications 1 ou 2.

## Patentansprüche

1. Elektronische Einrichtung zur Umkehr der Reihenfolge der Seiten für ein Postverarbeitungssystem, mit einem Textverarbeitungssystem (1), einem Drucker (2) Blatt für Blatt und einer Falt- und Kuvertiereinheit (4), wobei die Umkehreinrichtung elektronisch zwischen das Textverarbeitungssystem und den Drucker eingefügt werden soll und Mittel (50, 53, 54) enthält, um eine Folge von Binärwörtern entsprechend den alphanumerischen Zeichen eines Briefs zu speichernenthält, die ihm vom Textverarbeitungssystem geliefert werden, dadurch gekennzeichnet, daß die Umkehreinrichtung Mittel (50, 53, 54), um in die Folge von Binärwörtern einen ersten Steuerkode zu Beginn jeder Seite des Briefs und einen zweiten Steuerkode am Ende der letzten Seite des Briefs einzufügen, wobei dieser erste und dieser zweite Steuerkode Befehle für die Umkehreinrichtung bilden, und weiter Mittel (50, 53, 54) aufweist, um in der Folge von gespeicherten Binärwörtern die ersten und zweiten Steuerkodes zu erkennen, sodaß die gespeicherten Binärwörter an den Drucker Seite für Seite des Briefs gemäß der umgekehrten Reihenfolge der Seiten des Briefs geliefert werden und doch die ursprüngliche Reihenfolge der jede Seite bildenden Zeichen beibehalten bleibt.

2. Umkehreinrichtung nach Anspruch 1, die außerdem eine Alarmvorrichtung (52) enthält, um den Benutzer des Postverarbeitungssystems zu warnen, wenn die Anzahl von gespeicherten Seiten einen vorgegebenen Schwellwert überschreitet.

3. Postverarbeitungssystem mit einem Textverarbeitungssystem (1), einem Drucker (2) Blatt für Blatt, einer Falt- und Kuvertiereinheit (4), die mechanisch an den Drukker gekoppelt ist, um die Blätter zu empfangen, auf die der Drucker den Text eines Briefs gedruckt hat, um diese Blätter zu falten und in einen Umschlag zu stecken, und mit einer elektronischen Umkehreinrichtung nach einem der Ansprüche 1 oder 2 mit Eingangs-Ausgangsschnittstellen, die an das Textverarbeitungssystem, den Drucker und die Falt- und Kuvertiereinheit zur Koordinierung ihres Betriebs angeschlossen sind.

4. System nach Anspruch 3, in dem die Falt- und Kuvertiereinheit (4) mechanisch an den Drucker (2) über ein Transportorgan gekoppelt ist, das eine schräge Ebene (31) und mindestens eine von einem Motor angetriebene Rolle (32) enthält.

5. Falt- und Kuvertiereinheit mit einer elektronischen Umkehreinrichtung nach einem der Ansprüche 1 und 2.

## Claims

1. An electronic page order inverter for a mail treatment system comprising a word processor system (1), a sheet fed printer (2), and a folder-inserter (4), the inverter being designed to be coupled electrically between the word processor system and the printer, and comprising means (50, 53, 54) for recording a sequence of binary words representing the alphanumeric characters of a letter as they are delivered by the word processor system, characterised in that the inverter comprises means (50, 53, 54) for inserting in the sequence of binary words a first control code at the beginning of each page of the letter, and a second control code at the end of the last page of the fetter, said first and second control codes constituting instructions to the inverter, and means (50, 53, 54) for recognizing said first and second control codes in the recorded sequence of binary words for the purpose of playing back said recorded binary words to the printer, letter page by letter page in inverse order of letter pages while keeping the characters making up each page in their initial order.

2. An inverter according to claim 1, further including an alarm device (52) to warn the user of the mail processing system whenever the number of stored pages exceeds a predetermined threshold.

3. A mail processing system comprising a word processor system (1), a sheet-fed printer (2); a folder-inserter (4) mechanically coupled to the printer, for the purposes of: receiving sheets on which the printer has printed the text of a letter; folding said sheets; and inserting them in an envelope; and an electronic inverter according to one of claims 1 or 2 having input/output interfaces connected to the word processor system, to the printer, and to the folder-inserter in order to coordinate operation thereof.

4. A system according to claim 3, in which the folder-inserter (4) is mechanically coupled to the printer (2) by a conveyor comprising a sloping plane (31) and at least one roller (32) driven by a motor.

5. A folder-inserter including an electronic inverter according to one of claims 1 or 2.
